(19) Europäisches Patentamt
European Patent Office
Office européen des brevets

(11) **EP 4 694 377 A1**

(12) **EUROPEAN PATENT APPLICATION**
published in accordance with Art. 153(4) EPC

(43) Date of publication:
**11.02.2026 Bulletin 2026/07**

(21) Application number: **24791820.4**

(22) Date of filing: **26.03.2024**

(51) International Patent Classification (IPC):
*H04W 52/02* (2009.01)

(52) Cooperative Patent Classification (CPC):
**H04W 48/08; H04W 52/02**

(86) International application number:
**PCT/CN2024/083862**

(87) International publication number:
**WO 2024/217233 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023 CN 202310442418**

(71) Applicant: **Huawei Technologies Co., Ltd.
Shenzhen, Guangdong 518129 (CN)**

(72) Inventors:
• **ZHANG, Shuhang
Shenzhen, Guangdong 518129 (CN)**
• **GUAN, Lei
Shenzhen, Guangdong 518129 (CN)**
• **LI, Ruijie
Shenzhen, Guangdong 518129 (CN)**
• **XUAN, Yidi
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57) This application provides a communication method and a communication apparatus. In the method, a network device sends, on a first resource, first indication information indicating that system information of a first cell changes and/or system information of at least one second cell changes, sends system information of the first cell on a second resource, and sends system information of the at least one second cell on a third resource, so that a corresponding terminal device can receive the changed system information of the first cell on the second resource based on the first indication information, and/or the corresponding terminal device can receive the changed system information of the second cell on the third resource based on the first indication information. This ensures that the corresponding terminal device is correctly notified when the system information changes, thereby facilitating correct communication of the terminal device. In the method, a network device to which the first cell belongs sends system information, and a network device to which the second cell belongs may not send system information. This reduces a quantity of network devices sending system information, and helps reduce energy consumption of the network devices.

FIG. 3

**Description**

<u>CROSS-REFERENCE TO RELATED APPLICATION</u>

This application claims priority to Chinese Patent Application No. 202310442418.7, filed with the China National Intellectual Property Administration on April 21, 2023 and entitled "COMMUNICATION METHOD AND COMMUNICATION APPARATUS", which is incorporated herein by reference in its entirety.

<u>TECHNICAL FIELD</u>

This application relates to the field of communication technologies, and in particular, to a communication method and a communication apparatus.

<u>BACKGROUND</u>

With gradual evolution of communication systems, "low carbon" has attracted increasing attention in communication, particularly regarding how to reduce energy consumption of a network device. With evolution of cellular communication technologies, a used spectrum is increasingly wide, a quantity of transmit antennas of the network device is growing, and power consumption of the network device is increasingly high.

Therefore, how to reduce the energy consumption of the network device becomes an urgent problem to be resolved.

<u>SUMMARY</u>

Embodiments of this application provide a communication method and a communication apparatus, to reduce energy consumption of a network device.

In conventional technologies, each cell independently broadcasts system information (SIB) periodically, so that all cells have always-on signals. This prevents the cells from flexibly sleeping, and causes an energy waste. To save energy of the network device, in a possible manner, sending of system information of a cell is adjusted. For example, cells are classified into a data cell and a control cell, the control cell incorporates system information of the data cell in a network for broadcasting, and the data cell does not transmit the system information, to avoid energy consumption caused because the network device periodically broadcasts the system information in each cell. However, in an energy saving manner in which the control cell incorporates the system information of the data cell in the network, how the network device notifies a terminal device served by each cell of a change in system information is a problem that needs to be further resolved. Therefore, this application provides a communication method.

According to a first aspect, an embodiment of this application provides a communication method. The method may be performed by a network device or a module (for example, a chip) used in the network device. The method includes: sending first indication information on a first resource of a first cell, where the first indication information indicates that system information of the first cell changes and/or system information of at least one second cell changes; and sending system information of the first cell on a second resource of the first cell, and sending system information of the at least one second cell on a third resource that is of the first cell and that corresponds to the at least one second cell.

In the foregoing solution, the network device sends, on the first resource, the first indication information indicating that the system information of the first cell changes and/or the system information of the at least one second cell changes, sends the system information of the first cell on the second resource, and sends the system information of the at least one second cell on the third resource, so that a corresponding terminal device can receive the changed system information of the first cell on the second resource based on the first indication information, and/or the terminal device can receive the changed system information of the second cell on the third resource based on the first indication information. This ensures that the corresponding terminal device is correctly notified when the system information changes, thereby facilitating correct communication of the terminal device. In the method, a network device to which the first cell belongs sends system information, and a network device to which the second cell belongs may not send system information. This reduces a quantity of network devices sending system information, and helps reduce energy consumption of the network devices.

In a possible implementation method, the first indication information is downlink control information, the downlink control information includes a first field, and the first field indicates that the system information of the first cell changes and/or the system information of the at least one second cell changes.

In the foregoing solution, the downlink control information is reused, and no signaling needs to be newly added, so that compatibility can be ensured, and signaling overheads can be reduced.

In a possible implementation method, the first field includes a first indicator field and a second indicator field, the first indicator field indicates that the system information of the first cell changes, and the second indicator field indicates that the system information of the at least one second cell changes.

In a possible implementation method, the first field is a reserved bit in the downlink control information, a field of a short message in the downlink control information, or a reserved bit of a short message in the downlink control information.

In the foregoing solution, existing downlink control information is reused, and no signaling needs to be newly added, so that compatibility can be ensured, and signaling overheads can be reduced.

In a possible implementation method, the first indication information is downlink control information, and an RNTI for scrambling the downlink control information indicates that the system information of the first cell changes and/or the system information of the at least one second cell changes.

In the foregoing solution, a new function is added to the RNTI, and no signaling needs to be newly added, so that compatibility can be ensured, and signaling overheads can be reduced.

In a possible implementation method, the method further includes: sending second indication information, where the second indication information indicates a cell identifier of a cell whose system information changes.

In the foregoing solution, the cell identifier of the cell which is changed is indicated to the terminal device, so that the terminal device can accurately identify the cell whose system information changes.

In a possible implementation method, the first indication information further indicates a cell identifier of a cell whose system information changes.

In the foregoing solution, the cell identifier of the cell which is changed is indicated to the terminal device, so that the terminal device can accurately identify the cell whose system information changes.

In a possible implementation method, the method further includes: sending first configuration information to a terminal device served by the first cell, where the first configuration information includes a configuration of a paging occasion of the first cell; and sending second configuration information to a terminal device served by the at least one second cell, where the second configuration information includes a configuration of a paging occasion of each of the at least one second cell.

In a possible implementation method, the first resource includes the paging occasion of the first cell and the paging occasion of the at least one second cell.

In a possible implementation method, paging occasions of any two of the first cell and the at least one second cell do not overlap.

In a possible implementation method, the first indication information indicates that the system information of the first cell changes, and the first resource includes the paging occasion of the first cell and the paging occasion of the at least one second cell; or the first indication information indicates that the system information of the at least one second cell changes, the first resource includes the paging occasion of the at least one second cell, and the first resource does not include the paging occasion of the first cell.

In a possible implementation method, the first cell is a control cell, and the second cell is a data cell.

According to a second aspect, an embodiment of this application provides a communication method. The method may be performed by a terminal device or a module (for example, a chip) used in the terminal device. An example in which the terminal device performs the method is used. The method includes: The terminal device receives first indication information from a first cell on a first resource of the first cell, where the terminal device camps on a second cell, and the first indication information indicates that system information of the first cell changes and/or system information of the second cell changes.

In the foregoing solution, the network device sends, on the first resource, the first indication information indicating that the system information of the first cell changes and/or the system information of at least one second cell changes. This ensures that a corresponding terminal device is correctly notified when system information changes, thereby facilitating correct communication of the terminal device. In the method, a network device to which the first cell belongs sends system information, and a network device to which the second cell belongs may not send system information. This reduces a quantity of network devices sending system information, and helps reduce energy consumption of the network devices.

In a possible implementation method, that the terminal device receives the first indication information from the first cell on the first resource of the first cell includes: The terminal device receives the first indication information from the first cell on a paging occasion of the terminal device, where the paging occasion is included in the first resource.

In a possible implementation method, the first indication information indicates that the system information of the first cell changes; and the method further includes: The terminal device receives system information of the first cell on a second resource of the first cell.

In the foregoing solution, the terminal device receives the system information of the first cell on the second resource of the first cell, so that the terminal device can receive the changed system information of the first cell on the second resource based on the first indication information. This ensures that a corresponding terminal device is correctly notified when system information changes, thereby facilitating correct communication of the terminal device.

In a possible implementation method, the first indication information indicates that the system information of the second cell changes; and the method further includes: The terminal device receives the system information of the second cell on a third resource that is of the first cell and that corresponds to the second cell.

In the foregoing solution, the terminal device receives the system information of the second cell on the third resource of the first cell, so that the terminal device can receive the changed system information of the second cell on the third resource based on the first indication information. This ensures that a corresponding terminal device is correctly notified when the system information changes, thereby facilitating correct communication of the terminal device.

In a possible implementation method, the first indication information is downlink control information, the downlink control information includes a first field, and the first field indicates that the system information of the first cell changes and/or the system information of the second cell changes.

In the foregoing solution, existing downlink control information is reused, and no signaling needs to be newly added, so that compatibility can be ensured, and signaling overheads can be reduced.

In a possible implementation method, the first field includes a first indicator field and a second indicator field, the first indicator field indicates that the system information of the first cell changes, and the second indicator field indicates that the system information of the second cell changes.

In a possible implementation method, the first field is a reserved bit in the downlink control information, a field of a short message in the downlink control information, or a reserved bit of a short message in the downlink control information.

In the foregoing solution, the downlink control information is reused, and no signaling needs to be newly added, so that compatibility can be ensured, and signaling overheads can be reduced.

In a possible implementation method, the first indication information is downlink control information, and an RNTI for scrambling the downlink control information indicates that the system information of the first cell changes and/or the system information of the second cell changes.

In the foregoing solution, a new function is added to the RNTI, and no signaling needs to be newly added, so that compatibility can be ensured, and signaling overheads can be reduced.

In a possible implementation method, the method further includes: The terminal device receives second indication information from the first cell, where the second indication information indicates a cell identifier of a cell whose system information changes.

In the foregoing solution, the terminal device learns of the cell identifier of the cell which is changed, so that the terminal device can accurately identify the cell whose system information changes.

In a possible implementation method, the first indication information further indicates a cell identifier of a cell whose system information changes.

In the foregoing solution, the terminal device learns of the cell identifier of the cell which is changed, so that the terminal device can accurately identify the cell whose system information changes.

In a possible implementation method, the method further includes: The terminal device receives configuration information from the first cell, where the configuration information includes a configuration of a paging occasion of the second cell.

In a possible implementation method, the first resource includes a paging occasion of the first cell and a paging occasion of the second cell.

In a possible implementation method, before the terminal device receives the system information of the second cell on the third resource that is of the first cell and that corresponds to the second cell, including: The terminal device determines whether a cell identifier of a cell on which the terminal device camps includes a cell identifier of the second cell; and that the terminal device receives the system information of the second cell on the third resource that is of the first cell and that corresponds to the second cell includes: When the cell identifier of the cell on which the terminal device camps includes the cell identifier of the second cell, the terminal device receives the system information of the second cell on the third resource.

In the foregoing solution, when the system information of the second cell is updated, a terminal device that camps on the second cell receives the changed system information of the second cell. When the system information of the second cell is not updated, the terminal device that camps on the second cell does not need to receive the system information of the second cell. Therefore, overheads of the terminal device can be reduced.

In a possible implementation method, before the terminal device receives the system information of the second cell on the third resource that is of the first cell and that corresponds to the second cell, including: The terminal device determines whether a cell identifier of a cell on which the terminal device camps is the same as a cell identifier of the second cell; and that the terminal device receives the system information of the second cell on the third resource that is of the first cell and that corresponds to the second cell includes: When the cell identifier of the cell on which the terminal device camps is the same as the cell identifier of the second cell, the terminal device receives the system information of the second cell from the first cell on the third resource.

In the foregoing solution, when the system information of the second cell is updated, a terminal device that camps on the second cell receives the changed system information of the second cell. When the system information of the second cell is not updated, the terminal device that camps on the second cell does not need to receive the system information of the second cell. Therefore, overheads of the terminal device can be reduced.

In a possible implementation method, a paging occasion of the first cell does not overlap the paging occasion of the second cell.

In a possible implementation method, the first indication information indicates that the system information of the first cell changes, and the first resource includes the paging occasion of the first cell and the paging occasion of the second cell; or the first indication information indicates that the system information of the second cell changes, the first resource includes the paging occasion of the second cell, and the first resource does not include the paging occasion of the first cell.

According to a third aspect, an embodiment of this application provides a communication apparatus. The apparatus may be a network device or a module (for example, a chip) used in the network device. The apparatus has a function of implementing any implementation method of the first aspect. The function may be implemented by hardware, or may be implemented by hardware executing corresponding software. The hardware or software includes one or more modules corresponding to the foregoing functions.

According to a fourth aspect, an embodiment of this application provides a communication apparatus. The apparatus may be a terminal device, or may be a module (for example, a chip) used in the terminal device. The apparatus has a function of implementing any implementation method of the second aspect. The function may be implemented by hardware, or may be implemented by hardware executing corresponding software. The hardware or software includes one or more modules corresponding to the foregoing functions.

According to a fifth aspect, an embodiment of this application provides a communication apparatus, including a unit or means (means) configured to perform steps of any one of the implementation methods in the first aspect and the second aspect.

According to a sixth aspect, an embodiment of this application provides a communication apparatus, including a processor and an interface circuit. The processor is configured to communicate with another apparatus through the interface circuit; and perform any one of the implementation methods in the first aspect and the second aspect. There are one or more processors.

According to a seventh aspect, an embodiment of this application provides a communication apparatus, including a processor coupled to a memory. The processor is configured to invoke a program stored in the memory, to perform any one of the implementation methods in the first aspect and the second aspect. The memory may be located inside or outside the apparatus. In addition, there may be one or more processors.

According to an eighth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods in the first aspect and the second aspect.

According to a ninth aspect, an embodiment of this application further provides a computer program product. The computer program product includes a computer program or instructions. When the computer program or the instructions are run by a communication apparatus, any one of the implementation methods in the first aspect and the second aspect is performed.

According to a tenth aspect, an embodiment of this application further provides a computer-readable storage medium. The computer-readable storage medium stores instructions, and when the instructions are run on a communication apparatus, any one of the implementation methods in the first aspect and the second aspect is performed.

According to an eleventh aspect, an embodiment of this application further provides a chip system, including a processor, configured to perform any one of the implementation methods in the first aspect and the second aspect.

According to a twelfth aspect, an embodiment of this application further provides a communication method, including: A network device sends first indication information on a first resource of a first cell, where the first indication information indicates that system information of at least one second cell changes; and a first terminal device that camps on the second cell receives the first indication information on the first resource of the first cell.

BRIEF DESCRIPTION OF DRAWINGS

FIG. 1(a) is a diagram of an architecture of a communication system to which an embodiment of this application is applicable;

FIG. 1(b) is a diagram of a network device;

FIG. 2 is an example diagram of a data-control separation architecture according to an embodiment of this application;

FIG. 3 is a schematic flowchart of a communication method according to an embodiment of this application;

FIG. 4(a) is a configuration diagram of a paging occasion according to an embodiment of this application;

FIG. 4(b) is another configuration diagram of a paging occasion according to an embodiment of this application;

FIG. 5 is a diagram of a structure of a communication apparatus according to an embodiment of this application; and

FIG. 6 is a diagram of a structure of a communication apparatus according to an embodiment of this application.

DESCRIPTION OF EMBODIMENTS

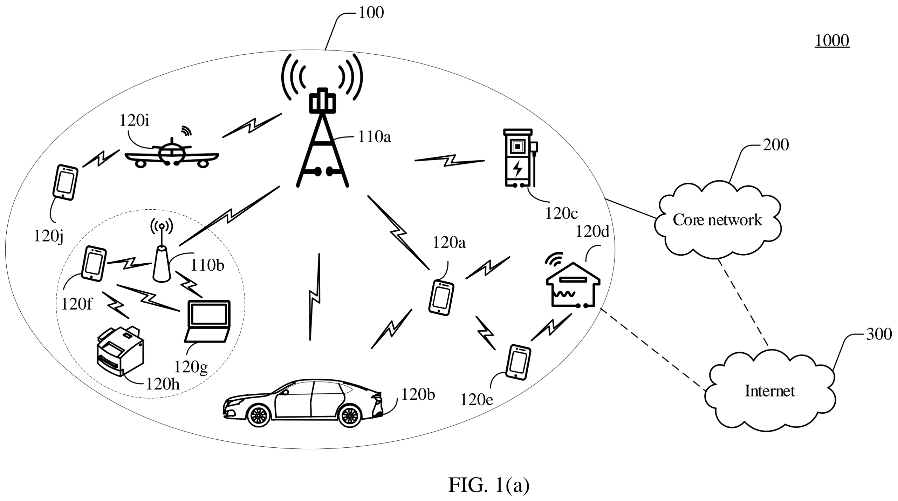

FIG. 1(a) is a diagram of an architecture of a communication system to which an embodiment of this application is applicable. The communication system 1000 as shown in FIG. 1(a) includes a radio access network 100 and a core network 200. Optionally, the communication system 1000 further includes an Internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1(a) is only a diagram. The communication system may further include other network devices, for example, a wireless relay device and a wireless backhaul device, which are not shown in FIG. 1(a).

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a $5^{th}$ generation ($5^{th}$ generation, 5G) mobile communication system, a next generation base station in a $6^{th}$ generation ($6^{th}$ generation, 6G) mobile communication system, a base station in a future mobile communication system, an access node in a wireless fidelity (wireless fidelity, Wi-Fi) system, or the like. The network device may alternatively be a module or a unit that completes some functions of a base station, for example, may be a central unit (central unit, CU), or may be a distributed unit (distributed unit, DU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a medium access control (medium access control, MAC) layer of the base station, and may further complete some or all of functions of a physical layer. For detailed descriptions of the foregoing protocol layers, refer to technical specifications related to the $3^{rd}$ generation partnership project ($3^{rd}$ generation partnership project, 3GPP). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used for the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used for the terminal device are not limited in embodiments of this application.

The network device and the terminal device may be fixed at a position, or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the network device and the terminal device are not limited in embodiments of this application.

Roles of the network device and the terminal device may be relative. For example, the helicopter or uncrewed aerial vehicle 120i in FIG. 1(a) may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, a function of the network device may alternatively be performed by a module (for example, a chip) in the network device, or may be performed by a control subsystem that includes the function of the network device. The control subsystem that includes the function of the network device may be a control center in the foregoing application scenarios such as smart grid, industrial control, intelligent transportation, and a smart city. A function of the terminal device may alternatively be performed by a module (for example, a chip or a modem) in the terminal device, or may be performed by an apparatus including the function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection with a cell controlled by the network device. The cell that establishes the wireless connection with the terminal device is referred to as a serving cell of the terminal device.

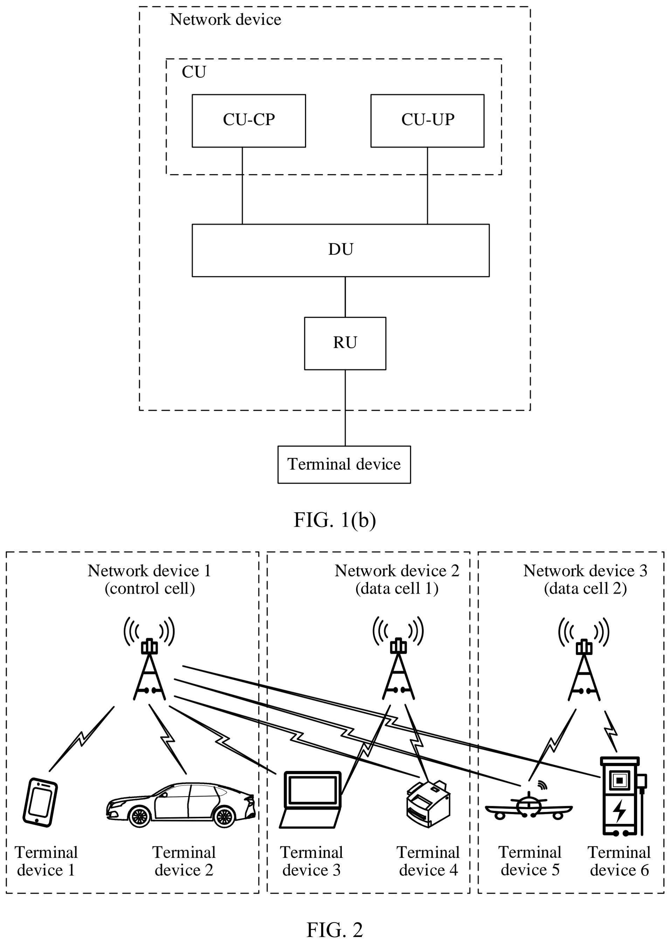

FIG. 1(b) is a diagram of a network device. As shown in FIG. 1(b), the network device includes one or more CUs, one or more DUs, and one or more radio units (radio units, RUs). For clarity, FIG. 1(b) shows only one CU, one DU, and one RU. The CU is configured to connect to a core network and the one or more DUs. Optionally, the CU may have some functions of the core network. The CU may include a CU control plane (control plane, CP) and a CU user plane (user plane, UP).

The CU and the DU may be configured based on a protocol layer function of a wireless network implemented by the CU. For example, the CU is configured to implement a function of a PDCP layer and a protocol layer above the PDCP layer (for example, a radio resource control (radio resource control, RRC) layer and/or an SDAP layer), and the DU is configured to implement a function of a protocol layer below the PDCP layer (for example, a radio link control (radio link control, RLC) layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on a delay. Functions whose processing time needs to meet a requirement of a small delay are set on the DU, and functions whose processing time does not need to meet the requirement of the delay are set on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

With gradual evolution of communication systems, "low carbon" has attracted increasing attention in communication. In particular, how to reduce energy consumption of a network device has attracted increasing attention. With evolution of cellular communication technologies, a used spectrum is increasingly wide, a quantity of transmit antennas of the network device is increasingly large, and power consumption of the network device is increasingly high.

Therefore, researchers propose a plurality of energy-saving solutions for network devices. A manner considered effective in reducing energy consumption of the network device is separating data information and control information (hereinafter data-control separation for short). In a manner in which some cells (which may be referred to as control cells) incorporate all control information in a network, another cell (which may be referred to as a data cell) transmits only data information, thereby implementing on-demand access and dynamic switch of the data cell, and reducing energy consumption of the network device.

In a data-control separation architecture, cells may be classified into two types: a control cell and a data cell.

The control cell is a cell that is responsible for transmission of both control information and data information. Specifically, in the control cell, the network device sends control information and data information to a terminal device that accesses and camps on the control cell, and sends control information to a terminal device that accesses and camps on a neighboring data cell. The control information is information that supports uplink, downlink, or sidelink communication, or information for improving uplink, downlink, or sidelink communication quality, for example, includes but is not limited to related information for implementing at least one of the following functions: network access, transmission scheduling, channel measurement, communication standard interaction, network configuration notification, and the like. The control information may include but is not limited to one or more of the following information or information that has same or similar functions as the following information: a synchronization signal block (synchronization signal block, SSB), system information, and paging information. During specific implementation, the system information may be a system information block (system information block, SIB), a master information block (master information block, MIB), or the like.

The data cell is a cell that is not responsible for transmission of all or a part of control information, and is mainly responsible for transmission of data information. Specifically, in the data cell, the network device sends data information to a terminal device that camps on the data cell. For example, the data cell supports only transmission of data information, or the data cell supports transmission of data information and transmission of a small amount of control information.

After establishing a connection with the control cell through initial access, the terminal device may access and camp on another data cell based on a service requirement for data transmission. In this case, the control cell not only needs to send control information and data information to the terminal device that camps on the control cell, but also needs to send control information to the terminal device that camps on the neighboring data cell.

The terminal device that accesses and camps on the data cell needs to receive the control information of the data cell from the control cell to ensure a data transmission service, and also needs to receive the control information of the control cell from the control cell to ensure correct reception of the control information.

FIG. 2 is an example diagram of a data-control separation architecture according to an embodiment of this application. In this example, a terminal device 1 and a terminal device 2 access and camp on a cell served by a network device 1, and the cell is a control cell; a terminal device 3 and a terminal device 4 access and camp on a cell served by a network device 2, the cell is a data cell (referred to as a data cell 1 below), and the terminal device 3 and the terminal device 4 further establish connections with the control cell before camping on the data cell 1; and a terminal device 5 and a terminal device 6 access and camp on a cell served by a network device 3, the cell is a data cell (referred to as a data cell 2 below), and the terminal device 5 and the terminal device 6 further establish connections with the control cell before camping on the data cell 2.

Therefore, in this example, the network device 1 may send downlink control information to the terminal device 1 to the terminal device 6, and the terminal device 1 to the terminal device 6 may send uplink control information to the network device 1. The network device 1 may send downlink data information to the terminal device 1 and the terminal device 2, and the terminal device 1 and the terminal device 2 may send uplink data information to the network device 1. The network device 2 may send downlink data information to the terminal device 3 and the terminal device 4, and the terminal device 3 and the terminal device 4 may send uplink data information to the network device 2. The network device 3 may send downlink data information to the terminal device 5 and the terminal device 6, and the terminal device 5 and the terminal device 6 may send uplink data information to the network device 3.

It should be noted that FIG. 2 is merely used as an example. During actual application, a quantity of terminal devices that access a data cell or a control cell is not limited, and a quantity of data cells is not limited either. The control cell and the data cell may be deployed on a same network device. For example, the network device 1 to the network device 3 in FIG. 2 may be a same network device. Alternatively, the control cell and the data cell may be deployed on different network devices. For example, the network device 1 to the network device 3 in FIG. 2 are respectively three different network devices; or the network device 1 is a network device, and the network device 2 and the network device 3 are a same network device. In addition, during actual application, one or more data cells may be deployed under one network device.

In the foregoing data-control separation architecture, there may be the following problems.

Problem 1: When system information of the control cell changes, or system information of a specific data cell or some data cells changes, how does the control cell accurately notify a corresponding terminal device to receive changed system information, and cause a terminal device that does not need to receive the changed system information not to receive the changed system information, to avoid an increase in energy consumption caused because some terminal devices perform additional operations? FIG. 2 is used as an example. If system information of the data cell 1 changes, the control cell should notify the terminal device 3 and the terminal device 4 to receive changed system information, and the terminal device 1, the terminal device 2, the terminal device 5, and the terminal device 6 do not need to receive the changed system information.

Problem 2: A type of the changed system information may be the system information of the data cell or may be the system information of the control cell. How to notify the terminal device of the type of the changed system information needs to be resolved.

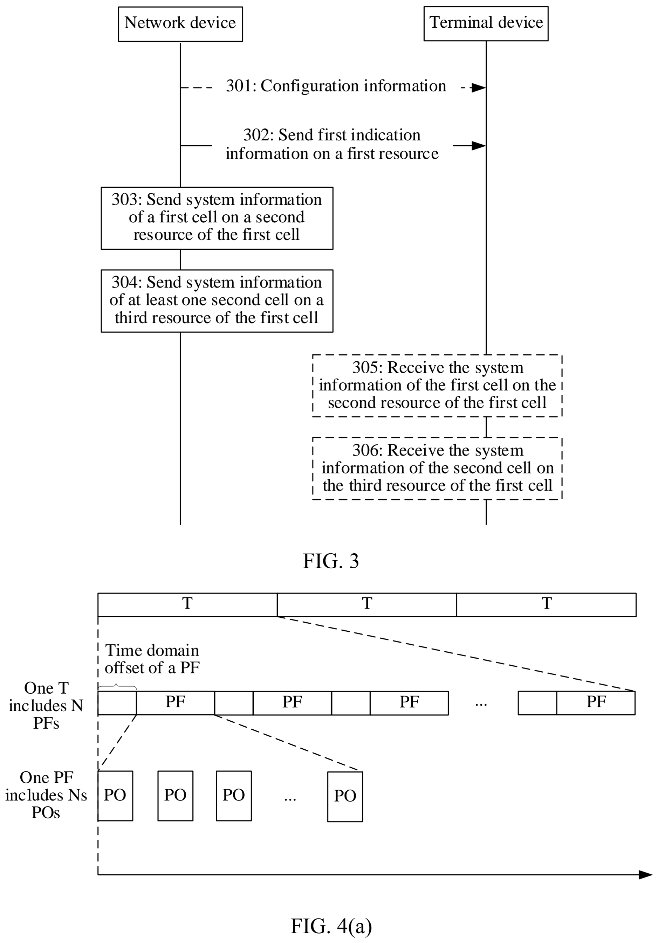

FIG. 3 is a schematic flowchart of a communication method according to an embodiment of this application. The method includes the following steps.

Step 302: A network device sends first indication information on a first resource of a first cell, where the first indication information indicates that system information of the first cell changes and/or system information of at least one second cell changes.

A terminal device corresponding to the first cell receives the first indication information, and/or a terminal device corresponding to the second cell receives the first indication information, and the terminal device corresponding to the first cell and/or the terminal device corresponding to the second cell learn/learns, by using the first indication information, that the system information changes.

The terminal device corresponding to the first cell is also referred to as a terminal device that shares the first cell, and specifically refers to a terminal device that needs to receive control information from the first cell. The terminal device corresponding to the first cell includes a terminal device that camps on the first cell and at least one terminal device that camps on the second cell, and the terminal device that camps on the second cell shares the first cell, in other words, the terminal device that camps on the second cell needs to receive control information from the first cell. In a possible manner, the first cell is also referred to as a control cell. For example, the first cell is a cell that belongs to the network device 1 in the example in FIG. 2. The terminal device corresponding to the first cell includes a terminal device 1 to a terminal device 6. The terminal device 1 and the terminal device 2 camp on the first cell, the terminal device 3 and the terminal device 4 camp on one second cell, and the terminal device 5 and the terminal device 6 camp on another second cell.

The terminal device corresponding to the second cell may be understood as a terminal device that shares the second cell, and specifically refers to a terminal device that needs to receive data information from the second cell. The terminal device corresponding to the second cell includes a terminal device that camps on the second cell and does not include a terminal device in another cell. In a possible manner, the second cell is also referred to as a data cell. For example, the second cell is a cell that belongs to the network device 2 or the network device 3 in the example in FIG. 2. When the second cell belongs to the network device 2, the terminal device corresponding to the second cell includes the terminal device 3 and the terminal device 4. When the second cell belongs to the network device 3, the terminal device corresponding to the second cell includes the terminal device 5 and the terminal device 6.

In this embodiment of this application, the first cell is used by the network device to send the control information to the terminal device that camps on the first cell and the terminal device that camps on the at least one second cell, and send the data information to the terminal device that camps on the first cell. The second cell is used by the network device to send the data information to the terminal device that camps on the second cell.

In a possible manner, the network device continuously sends the first indication information on the first resource in a system information modification period.

The first indication information indicates that the system information of the first cell changes and/or the system information of the at least one second cell changes. In an implementation method, the first indication information explicitly or directly indicates that the system information of the first cell changes and/or the system information of the at least one second cell changes. For example, the first indication information includes the first information, and the first information indicates that the system information of the first cell changes and/or the system information of the at least one second cell changes. In another implementation method, the first indication information implicitly or indirectly indicates that the system information of the first cell changes and/or the system information of the at least one second cell changes. For example, the first indication information corresponds to second information, and the second information indicates that the system information of the first cell changes and/or the system information of the at least one second cell changes.

An example in which the first indication information is downlink control information (downlink control information, DCI) (for example, may be specifically DCI 1_0) is used. For example, a radio network temporary identifier (radio network temporary identifier, RNTI) for scrambling the DCI indicates that the system information of the first cell changes and/or the system information of the at least one second cell changes. The RNTI is a specific example of the second information. The RNTI may be an RNTI newly added based on conventional technologies, or an existing RNTI in conventional technologies, for example, a paging RNTI (paging-RNTI, P-RNTI), may be reused as the RNTI. For another example, a first field in the DCI indicates that the system information of the first cell changes and/or the system information of the at least one second cell changes. The first field is a specific example of the first information. The first field may be a field including reserved bits in the DCI, or may be a field including reserved bits in a specific message (for example, a short message (short Message)) in the DCI. In this solution, the existing DCI is reconstructed, and no additional message needs to be newly added. Therefore, additional overheads can be reduced, and compatibility is good.

Optionally, the first field includes a first indicator field and a second indicator field. When the first indication information indicates that the system information of the first cell changes and the system information of the at least one second cell changes, the first indicator field indicates that the system information of the first cell changes, and the second indicator field indicates that the system information of the at least one second cell changes.

In addition to the manner of implementing the function of the first indication information by using the DCI, in this embodiment of this application, the function of the first indication information may alternatively be implemented in another manner. For example, the first indication information may be a medium access control control element (medium access control control element, MAC CE), layer 1 (L1) signaling, layer 2 (L2) signaling, higher layer signaling, or the like.

In an implementation method, the first indication information further indicates a cell identifier of a cell whose system information changes. The cell identifier in this application may be a physical cell identifier. FIG. 2 is used as an example. If system information of the control cell changes, the first indication information may indicate a cell identifier of the control cell; if system information of the data cell 1 changes, the first indication information may indicate a cell identifier of the data cell 1; or if system information of the control cell and system information of the data cell 1 change, the first indication information may indicate a cell identifier of the control cell and a cell identifier of the data cell 1.

In another implementation method, the network device further sends second indication information, where the second indication information indicates a cell identifier of a cell whose system information changes. Sending time of the second indication information may be before, after, or the same as sending time of the first indication information. FIG. 2 is used as an example. If system information of the control cell changes, the second indication information may indicate a cell identifier of the control cell; if system information of the data cell 1 changes, the second indication information may indicate a cell identifier of the data cell 1; or if system information of the control cell and system information of the data cell 1 change, the second indication information may indicate a cell identifier of the control cell and a cell identifier of the data cell 1.

The first indication information may be sent on one or more paging occasions included in the first resource. Therefore, in an optional implementation, the method shown in FIG. 3 further includes the following step 301. In an implementation, step 301 may be performed before step 302.

Step 301: The network device sends configuration information to the terminal device corresponding to the first cell. Correspondingly, the terminal device corresponding to the first cell receives the configuration information.

As described above, the terminal device corresponding to the first cell is also referred to as a terminal device that shares the first cell, and specifically refers to a terminal device that needs to receive control information from the first cell.

The configuration information may be at a cell level, to be specific, different terminal devices that camp on a same cell correspond to same configuration information, and different terminal devices that camp on different cells correspond to different or not completely same configuration information. The configuration information may alternatively be at a cell group level, to be specific, different terminal devices that camp on a plurality of cells in a same cell group correspond to same configuration information.

The configuration information includes at least one of the following information: time-frequency resource information used for broadcasting system information, a system information modification period (modification period), a paging period (T), a quantity of paging frames (Paging Frames, PFs) in one paging period, a time domain offset of a paging frame (PF_offset), a quantity of paging occasions (Paging Occasions, POs) in one paging frame, and a 1st physical downlink control channel (physical downlink control channel, PDCCH) monitoring occasion of a paging occasion (first PDCCH-Monitoring Occasion Of PO).

A frame for sending paging information is referred to as a paging frame, a part of time-frequency resources in the paging frame is used for sending the paging information, and the part of time-frequency resources is referred to as a paging occasion. Each paging occasion is allocated to one or more terminal devices, and the terminal device waits for paging information on the allocated paging occasion.

For the terminal device that camps on the first cell, the time-frequency resource information that is in the configuration information and that is used for broadcasting the system information includes time-frequency resource information used for broadcasting the system information of the first cell.

For the terminal device that camps on the second cell, the time-frequency resource information that is in the configuration information and that is used for broadcasting the system information includes time-frequency resource information used for broadcasting the system information of the first cell and time-frequency resource information used for broadcasting the system information of the second cell.

In this embodiment of this application, the system information of the first cell is also referred to as system information of the control cell, and the system information of the second cell is also referred to as system information of the data cell.

The system information modification period, the paging period, the quantity of paging frames in one paging period, the time domain offset of the paging frame, the quantity of paging occasions in one paging frame, and the 1st PDCCH monitoring occasion of the paging occasion in the configuration information may be used by the terminal device to determine a paging occasion of the terminal device. Therefore, the information may also be collectively referred to as a configuration of a paging occasion. If the configuration information is sent to the terminal device that camps on the first cell, the information may be referred to as a configuration of a paging occasion of the first cell. If the configuration information is sent to the terminal device that camps on the second cell, the information may be referred to as a configuration of a paging occasion of the second cell.

In an implementation method, that the network device sends the configuration information to the terminal device corresponding to the first cell specifically includes: The network device sends first configuration information to the terminal device that camps on the first cell, where the first configuration information includes the configuration of the paging occasion of the first cell; and the network device sends second configuration information to the terminal device that camps on the at least one second cell, where the second configuration information includes a configuration of a paging occasion of each of the at least one second cell. For specific implementation of the first configuration information and the second configuration information, refer to the content included in the configuration information described above.

The following describes two different methods for configuring a paging occasion.

Method 1: Paging occasions of different cells may overlap.

If two terminal devices camp on different cells, paging occasions of the two terminal devices may be the same. Two different cells herein may include the first cell and one second cell, or may include two different second cells. FIG. 2 is used as an example. A paging occasion of the control cell may overlap a paging occasion of the data cell 1, indicating that a paging occasion of the terminal device 1 may overlap a paging occasion of the terminal device 3, the paging occasion of the terminal device 1 may overlap a paging occasion of the terminal device 4, a paging occasion of the terminal device 2 may overlap the paging occasion of the terminal device 3, and the paging occasion of the terminal device 2 may overlap the paging occasion of the terminal device 4. FIG. 2 is used as an example. The paging occasion of the data cell 1 may overlap a paging occasion the data cell 2, indicating that a paging occasion of the terminal device 3 may overlap a paging occasion of the terminal device 5, the paging occasion of the terminal device 3 may overlap a paging occasion of the terminal device 6, a paging occasion of the terminal device 4 may overlap the paging occasion of the terminal device 5, and the paging occasion of the terminal device 4 may overlap the paging occasion of the terminal device 6.

The following describes a feasible method for configuring a paging occasion based on the method 1.

FIG. 4(a) is a configuration diagram of a paging occasion according to an embodiment of this application. With reference to FIG. 4(a), in this embodiment of this application, a position of a PF configured for the terminal device in a system frame satisfies the following formula (1):

$$(SFN + PF\_offset) \bmod T = (T \operatorname{div} N) * (UE\_ID \bmod N) \quad \text{Formula (1)}$$

SFN is a frame number (or a number) of the system frame, PF_offset is a time domain offset of the PF, T is a length of one paging period, N is a quantity of PFs in one paging period, and UE_ID is a number of the terminal device. mod indicates a modulo operation, and div indicates an exact division operation.

A position of a PO configured for the terminal device in the PF satisfies the following formula (2):

$$i\_s = \operatorname{floor}(UE\_ID/N) \bmod Ns \quad \text{Formula (2)}$$

i_s is a number of the PO, and Ns is a quantity of POs in one PF. A specific time-domain and/or frequency-domain resource position of the PO is configured by using a 1st PDCCH monitoring occasion of the paging occasion.

Each PO may include one or more slots (slots), and paging information in each PO is carried on a PDCCH resource. A 1st PDCCH monitoring occasion carrying the PO may be configured for the terminal device by using the foregoing configuration information.

PF_offset, T, N, and Ns in the formulas (1) and (2) are configured for the terminal device by using the foregoing configuration information. For a specific terminal device, based on the foregoing formulas (1) and (2), which system frame in a paging period is a paging frame configured for the terminal device may be determined, and which time-frequency resource position in a paging frame configured for the terminal device is a paging occasion configured for the terminal device may be determined.

A specific PF may be configured for a plurality of terminal devices simultaneously, in other words, the plurality of terminal devices can determine, by using the foregoing formula (1), that the specific PF is configured for the plurality of terminal devices. A specific PO may also be configured for a plurality of terminal devices in different cells, in other words, the plurality of terminal devices in different cells can determine, by using the foregoing formulas (1) and (2), that the specific PO is configured for the plurality of terminal devices. For example, for a specific PO, both the terminal device 1 and the terminal device 5 in the example in FIG. 2 determine, based on the foregoing formulas (1) and (2), that the PO is configured for the terminal device 1 and the terminal device 5.

Method 2: Paging occasions of different cells do not overlap.

If two terminal devices camp on different cells, paging occasions of the two terminal devices are different. Two different cells herein may include the first cell and one second cell, or may include two different second cells. FIG. 2 is used as an example. A paging occasion of the control cell does not overlap a paging occasion of the data cell 1, indicating that a paging occasion of the terminal device 1 does not overlap a paging occasion of the terminal device 3, the paging occasion of the terminal device 1 does not overlap a paging occasion of the terminal device 4, a paging occasion of the terminal device 2 does not overlap the paging occasion of the terminal device 3, and the paging occasion of the terminal device 2 does not overlap the paging occasion of the terminal device 4. FIG. 2 is used as an example. The paging occasion of the data cell 1 does not overlap a paging occasion of the data cell 2, indicating that a paging occasion of the terminal device 3 does not overlap a paging occasion of the terminal device 5, the paging occasion of the terminal device 3 does not overlap a paging occasion of the terminal device 6, a paging occasion of the terminal device 4 does not overlap the paging occasion of the terminal device 5, and the paging occasion of the terminal device 4 does not overlap the paging occasion of the terminal device 6.

The following describes a feasible method for configuring a paging occasion based on the method 2.

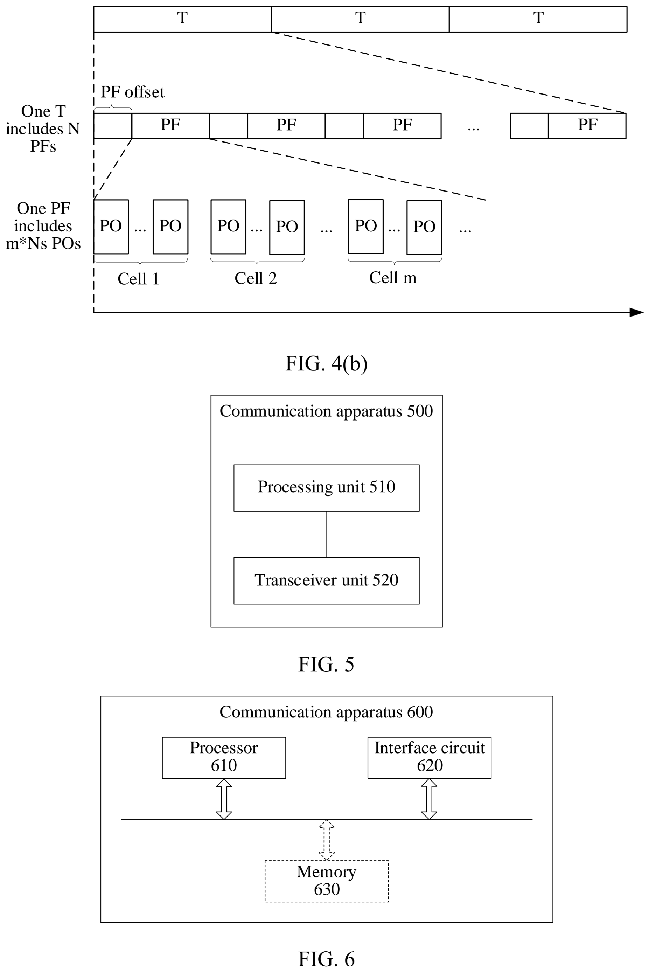

FIG. 4(b) is a configuration diagram of a paging occasion according to an embodiment of this application. With reference to FIG. 4(b), in this embodiment of this application, a feasible method for configuring the paging occasion may be that a position of a PF configured for the terminal device in a system frame satisfies the foregoing formula (1).

A position of a PO that is configured for the terminal device camping on a cell m and that is in the PF satisfies the following formulas (3-1) and (3-2):

$$i\_s\_1 = floor\ (UE\_ID/N)\ mod\ Ns\_1\ \ Formula\ (3\text{-}1)$$

$$i\_s\_m = floor\ (UE\_ID/N)\ mod\ Ns\_m + Ns\_1 + ... + Ns\_(m\text{--}1)\ \ Formula\ (3\text{-}2)$$

i_s_m is a number of the PO in the cell m, Ns_m is a quantity of POs in the cell m in one PF, and a value of m is 2, 3, ....

The formulas (3-1) and (3-2) indicate that first Ns_1 POs are configured for a terminal device that camps on a cell 1, next Ns_2 POs are configured for a terminal device that camps on a cell 2, and the rest may be deduced by analogy. The cell 1, the cell 2, ..., the cell m, ... include one control cell and at least one data cell.

Each PO may include one or more slots (slots), and paging information in each PO is carried on a PDCCH resource. A 1st PDCCH monitoring occasion carrying the PO may be configured for the terminal device by using the foregoing configuration information.

PF_offset, T, N, and Ns_m in the foregoing formulas (1), (3-1), and (3-2) are configured for the terminal device by using the foregoing configuration information, where the terminal device camps on the cell m. For a specific terminal device, based on the foregoing formulas (1), (3-1), and (3-2), which system frame in a paging period is a paging frame configured for the terminal device may be determined, and which time-frequency resource position in a paging frame configured for the terminal device is a paging occasion configured for the terminal device may be determined.

A specific PF may be configured for a plurality of terminal devices simultaneously, in other words, the plurality of terminal devices can determine, by using the foregoing formula (1), that the specific PF is configured for the plurality of terminal devices. A specific PO is not configured for terminal devices in different cells. To be specific, if two terminal devices camp on different cells, the PO is not allocated to the two terminal devices simultaneously.

In the method 2, a plurality of POs in one PF are divided based on cells, so that POs of terminal devices camping on different cells do not overlap.

Another feasible method for configuring the paging occasion may be that a position of a PF configured for the terminal device in a system frame satisfies a formula (4).

$$(SFN + PF\_offset\_m)\ mod\ T = (T\ div\ N\_m) * (UE\_ID\ mod\ N)\ \ Formula\ (4)$$

SFN is a frame number (or a number) of the system frame, PF_offset_m is a time domain offset of the configured for the cell m, N_m is a quantity of PFs in one paging period and configured for the cell m, T is a length of one paging period, and UE_ID is a number of the terminal device.

In the method, different time domain offsets of a PF and a quantity of PFs in one paging period are configured for different cells, so that paging frames of different cells do not overlap. A specific PF is not configured for terminal devices in different cells. To be specific, if two terminal devices camp on different cells, the PF is not allocated to the two terminal devices simultaneously.

Another feasible method for configuring the paging occasion may be that a position of a PF configured for the terminal device in a system frame satisfies the foregoing formula (1). A position of a PO that is configured for the terminal device camping on the first cell and that is in the PF satisfies the foregoing formula (2). A position of a PO that is configured for the terminal device camping on an m$^{th}$ (m > 1) cell and that is in the PF satisfies a formula (5) or a formula (6).

$$i\_s\_m = i\_s + PO\_offsett\_m,\ where\ m = 2, 3, ...\ \ Formula\ (5)$$

$$i\_s\_m = (i\_s + PO\_offsett\_m)\ mod\ N\_s,\ where\ m = 2, 3, ...\ \ Formula\ (6)$$

Each cell in the m$^{th}$ cell herein may be referred to as a second cell, that is, each cell is a data cell.

In the method, a time domain offset relative to a PO of the first cell is configured for a PO of the second cell, so that paging occasions of different cells do not overlap. A specific PF is not configured for terminal devices in different cells. To be specific, if two terminal devices camp on different cells, the PF is not allocated to the two terminal devices simultaneously.

A specific PF may be configured for a plurality of terminal devices simultaneously, in other words, the plurality of terminal devices can determine, by using the foregoing formula (1), that the specific PF is configured for the plurality of terminal devices. A specific PO is not configured for terminal devices in different cells. To be specific, if two terminal devices camp on different cells, the PO is not allocated to the two terminal devices simultaneously.

In an implementation method, different POs in a same PF may be orthogonal in time domain, orthogonal in frequency domain, orthogonal in code domain, or orthogonal in another domain.

In an implementation method, a plurality of terminal devices that camp on different cells and share a same control cell each have different identification information (that is, UE_ID). Identification information of different terminal devices may be obtained through consecutive division based on a cell on which the terminal device camps, may be obtained through random division, or may be obtained through division according to a specific rule. This is not limited in this application. FIG. 2 is used as an example. The terminal device 1 to the terminal device 6 share the same control cell, and the six terminal devices each have different identification information. For example, UE_IDs of the terminal device 1 to the terminal device 6 are UE_ID 1 to UE_ID 6 in sequence.

In an implementation method, if a method for configuring the paging occasion of the terminal device is the foregoing method 1, that is, paging occasions of different cells may overlap, the first resource includes the paging occasion of the first cell and the paging occasion of the at least one second cell, or the first resource includes a paging occasion of the terminal device that camps on the first cell and a paging occasion of the terminal device that camps on the at least one second cell. FIG. 2 is used as an example. The first resource includes the paging occasions of the control cell, the data cell 1, and the data cell 2, that is, the paging occasions of the terminal device 1 to the terminal device 6.

In another implementation method, if a method for configuring the paging occasion of the terminal device is the foregoing method 2, that is, paging occasions of different cells do not overlap, when the first indication information indicates that the system information of the first cell changes, the first resource includes the paging occasion of the first cell and the paging occasion of the at least one second cell; when the first indication information indicates that the system information of the at least one second cell changes, the first resource includes the paging occasion of the at least one second cell, and the first resource does not include the paging occasion of the first cell; or when the first indication information indicates that the paging occasion of the first cell and the system information of the at least one second cell change, the first resource includes the paging occasion of the first cell and the paging occasion of the at least one second cell. FIG. 2 is used as an example. If the first indication information indicates that the system information of the control cell changes, the first resource includes the paging occasions of the control cell, the data cell 1, and the data cell 2, that is, the paging occasions of the terminal device 1 to the terminal device 6. If the first indication information indicates that the system information of the data cell 1 changes, the first resource includes the paging occasion of the data cell 1, that is, the paging occasion of the terminal device 3 and the paging occasion of the terminal device 4. If the first indication information indicates that the system information of the data cell 1 and the system information of the data cell 2 change, the first resource includes the paging occasion of the data cell 1 and the paging occasion of the data cell 2, that is, the paging occasions of the terminal device 3 to the terminal device 6.

Step 303: The network device sends system information of the first cell on a second resource of the first cell.

The second resource includes a time-frequency resource used for broadcasting the system information of the first cell.

In an implementation method, if the system information of the first cell does not change, the system information of the first cell sent by the network device on the second resource of the first cell is the same as the system information of the first cell sent last time.

In another implementation method, if the system information of the first cell changes, the system information of the first cell sent by the network device on the second resource of the first cell is different from the system information of the first cell sent last time. The system information of the first cell sent in this case is also referred to as changed system information of the first cell. In this case, the first indication information indicates at least that the system information of the first cell changes.

Step 304: The network device sends system information of the at least one second cell on a third resource of the first cell.

The third resource includes a time-frequency resource used for broadcasting the system information of the at least one second cell.

In an implementation method, if the system information of the second cell does not change, the system information of the second cell sent by the network device on the third resource of the first cell is the same as the system information of the second cell sent last time.

In another implementation method, if the system information of the second cell changes, the system information of the second cell sent by the network device on the third resource of the first cell is different from the system information of the second cell sent last time. The system information of the second cell sent in this case is also referred to as changed system information of the second cell. In this case, the first indication information indicates at least that the system information of the second cell changes.

FIG. 2 is used as an example. If the system information of the data cell 1 changes, and the system information of the data cell 2 and the system information of the control cell do not change, the first indication information indicates that the system information of the data cell 1 changes, and the network device sends the system information of the control cell in step 303, and sends system information of the data cell 1 and the system information of the data cell 2 in step 304. The system information of the control cell is the same as the system information of the control cell sent last time, the system information of the data cell 1 is different from the system information of the data cell 1 sent last time, and the system information of the data cell 2 is the same as system information of the data cell 2 that is sent last time.

In this application, a sequence of step 303 and step 304 is not limited.

The network device sends the first indication information on the first resource, and correspondingly, the terminal device receives the first indication information. The following describes a specific terminal device that can receive the first indication information in different cases.

Case 1: The method for configuring the paging occasion of the terminal device is the foregoing method 1, that is, paging occasions of different cells may overlap.

When the method for configuring the paging occasion of the terminal device is the foregoing method 1, the first resource used by the network device to send the first indication information includes the paging occasion of the first cell and the paging occasion of the at least one second cell. Therefore, the terminal device served by the first cell and the terminal device served by the at least one second cell can receive the first indication information. FIG. 2 is used as an example. All the terminal device 1 to the terminal device 6 can receive the first indication information.

Case 2: The method for configuring the paging occasion of the terminal device is the foregoing method 2, that is, paging occasions of different cells do not overlap.

When the method for configuring the paging occasion of the terminal device is the foregoing method 2, the first resource used to send the first indication information includes the paging occasion of the first cell and the paging occasion of the at least one second cell when the first indication information indicates that the system information of the first cell changes. Therefore, the terminal device served by the first cell and the terminal device served by the at least one second cell can receive the first indication information. FIG. 2 is used as an example. When the first indication information indicates that the system information of the control cell changes, all the terminal device 1 to the terminal device 6 can receive the first indication information.

When the method for configuring the paging occasion of the terminal device is the foregoing method 2, the first resource used to send the first indication information includes the paging occasion of the at least one second cell and the first resource does not include the paging occasion of the first cell when the first indication information indicates that the system information of the at least one second cell changes. Therefore, the terminal device served by the at least one second cell can receive the first indication information. FIG. 2 is used as an example. When the first indication information indicates that the system information of the data cell 1 changes, the terminal device 3 and the terminal device 4 can receive the first indication information, and another terminal device cannot receive the first indication information.

When the method for configuring the paging occasion of the terminal device is the foregoing method 2, the first resource used to send the first indication information includes the paging occasion of the first cell and the paging occasion of the at least one second cell when the first indication information indicates that the paging occasion of the first cell and the system information of the at least one second cell change. Therefore, the terminal device served by the first cell and the terminal device served by the at least one second cell can receive the first indication information. FIG. 2 is used as an example. When the first indication information indicates that the system information of the control cell and the system information of the data cell 1 change, the terminal device 1 to the terminal device 4 can receive the first indication information, and the terminal device 5 and the terminal device 6 cannot receive the first indication information.

Step 305: The terminal device receives the system information of the first cell on the second resource of the first cell.

If the first indication information indicates that the system information of the first cell changes, regardless of whether the paging occasion of the terminal device is configured by using the method 1 or the method 2, both the terminal device served by the first cell and the terminal device served by the at least one second cell can receive the first indication information. The terminal device receives the system information of the first cell on the second resource based on the first indication information. FIG. 2 is used as an example. If the first indication information indicates that the system information of the control cell changes, regardless of whether the paging occasion of the terminal device is configured by using the method 1 or the method 2, the first resource used to send the first indication information includes the paging occasions of the control cell, the data cell 1, and the data cell 2, and all the terminal device 1 to the terminal device 6 can receive the first indication information, and receive the system information of the first cell on the second resource based on the first indication information.

If the first indication information does not indicate that the system information of the first cell changes, the terminal device does not receive the system information of the first cell on the second resource, but still uses the previously received system information of the first cell. In this way, overheads of the terminal device can be reduced.

Step 306: The terminal device receives the system information of the second cell on the third resource of the first cell.

The terminal device is the terminal device that camps on the second cell.

When the method for configuring the paging occasion of the terminal device is the foregoing method 1, if the terminal device receives the first indication information, the terminal device further needs to determine whether to receive the system information of the second cell on the third resource. If determining to receive the system information of the second cell on the third resource, the terminal device receives the system information of the second cell on the third resource. If determining not to receive the system information of the second cell on the third resource, the terminal device does not receive the system information of the second cell on the third resource.

A method for determining, by the terminal device, whether to receive the system information of the second cell on the third resource is as follows.

In an implementation method, before receiving the system information of the second cell on the third resource that is of the first cell and that corresponds to the second cell, the terminal device determines whether a cell identifier of a cell on which the terminal device camps includes a cell identifier of the second cell. When the cell identifier of the cell on which the terminal device camps includes the cell identifier of the second cell, the terminal device receives the system information of the second cell on the third resource.

In another implementation method, before receiving the system information of the second cell on the third resource that is of the first cell and that corresponds to the second cell, the terminal device determines whether a cell identifier of a cell on which the terminal device camps is the same as a cell identifier of the second cell. When the cell identifier of the cell on which the terminal device camps is the same as the cell identifier of the second cell, the terminal device receives the system information of the second cell from the first cell on the third resource.

FIG. 2 is used as an example. Paging occasions of different cells are configured according to the foregoing method 1. If the first indication information indicates that the system information of the data cell 1 changes, all the terminal device 1 to the terminal device 6 receive the first indication information according to the foregoing descriptions. All the terminal device 1, the terminal device 2, the terminal device 5, and the terminal device 6 determine that the system information of the data cell 1 does not need to be received on the third resource, and the terminal device 3 and the terminal device 4 determine that the system information of the data cell 1 needs to be received on the third resource. Therefore, the terminal device 3 and the terminal device 4 receive the system information of the data cell 1 on the third resource, and the terminal device 1, the terminal device 2, the terminal device 5, and the terminal device 6 do not receive the system information of the data cell 1 on the third resource. According to the method, when the system information of the data cell is not updated, the terminal device that camps on the data cell does not need to receive the system information. Therefore, overheads of the terminal device can be reduced.

When the method for configuring the paging occasion of the terminal device is the foregoing method 2, if the terminal device receives the first indication information, and the first indication information indicates that the system information of the second cell on which the terminal device camps is updated, the terminal device receives the system information of the second cell on the third resource. If the terminal device does not receive the first indication information or receives the first indication information, but the first indication indicates that only the system information of the first cell is updated, the terminal device does not receive the system information of the second cell on the third resource.

FIG. 2 is used as an example. Paging occasions of different cells are configured according to the foregoing method 2. If the first indication information indicates that the system information of the data cell 1 changes, according to the foregoing descriptions, both the terminal device 3 and the terminal device 4 receive the first indication information, and the terminal device 1, the terminal device 2, the terminal device 5, and the terminal device 6 do not receive the first indication information. After receiving the first indication information, the terminal device 3 and the terminal device 4 receive the system information of the data cell 1 on the third resource, the terminal device 1, the terminal device 2, the terminal device 5, and the terminal device 6 do not receive the system information of the data cell 1 on the third resource. According to the method, when the system information of the data cell is not updated, the terminal device that camps on the data cell does not need to receive the system information. Therefore, overheads of the terminal device can be reduced.

In the foregoing solution, the network device sends, on the first resource, the first indication information indicating that the system information of the first cell changes and/or the system information of the at least one second cell changes, sends the system information of the first cell on the second resource, and sends the system information of the at least one second cell on the third resource, so that a corresponding terminal device can receive the changed system information of the first cell on the second resource based on the first indication information, and/or the corresponding terminal device can receive the changed system information of the second cell on the third resource based on the first indication information. This ensures that the corresponding terminal device is correctly notified when the system information changes, thereby facilitating correct communication of the terminal device. In addition, in the method, a network device to which the first cell belongs sends system information, and a network device to which the second cell belongs may not send system information. This reduces a quantity of network devices sending system information, and helps reduce energy consumption of the network devices.

In an implementation method, in this embodiment of this application, a compression technology may be further used to reduce system information overheads. Specifically, information shared by the system information of the control cell

and the system information of the data cell is compressed into the system information of the control cell for notification, and system information of the data cell includes only private information of the data cell. In other words, the shared system information is sent only once, and does not need to be sent repeatedly. In this case, that the system information of the control cell changes and that the information shared by the system information of the control cell and the system information of the data cell changes may be indicated based on the change of the system information of the control cell, and that the private information of the data cell changes may be indicated based on the change of the system information of the data cell. For example, when a part of system information of the data cell is the same as a part of system information of the control cell, the first indication information sent on the first resource may also indicate that the part of system information shared by the data cell and the control cell changes. The changed system information received by the terminal device on the second resource includes the part of system information shared by the data cell and the control cell. The terminal device may change the part of system information that is shared by the control cell and the data cell and that is in the system information of the data cell. This can reduce system information indication overheads and transmission overheads.

In an implementation method, system information of different data cells may be compressed, to reduce configuration and indication signaling overheads. In this case, during indication of the change in the system information, identification information of the data cell does not need to be specifically indicated. Instead, when the system information of the data cell needs to be changed, all terminal devices that camp on the data cell are indicated to change the system information. For example, when a plurality of data cells share a part of system information, the first indication information may indicate that system information of the plurality of data cells or all data cells changes, and the first indication information is sent on paging occasions corresponding to the plurality of data cells or all the data cells. The changed system information received by the terminal device on the third resource includes the part of system information shared by the plurality of cells or all the data cells, and the terminal device may change the part of system information. This can reduce system information indication overheads and transmission overheads.

It should be noted that step 301 is an optional step. When step 301 is not performed, the configuration information may be pre-configured by another device (for example, a network management device) for the terminal device, or may be determined in a manner predefined by a protocol.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 5 and FIG. 6 are diagrams of structures of possible communication apparatuses according to embodiments of this application. These communication apparatuses may be configured to implement functions of the network device or the terminal device in the foregoing method embodiment, and therefore can also implement beneficial effects of the foregoing method embodiment. In embodiments of this application, the communication apparatus may be the foregoing network device or terminal device, or may be a module (for example, a chip) used in the network device or the terminal device.

The communication apparatus 500 shown in FIG. 5 includes a processing unit 510 and a transceiver unit 520. The communication apparatus 500 is configured to implement functions of the network device or the terminal device in the foregoing method embodiments.

When the communication apparatus 500 is configured to implement the functions of the network device in the foregoing method embodiment, the processing unit 510 is configured to control the transceiver unit 520 to: send first indication information on a first resource of a first cell, where the first indication information indicates that system information of the first cell changes and/or system information of at least one second cell changes, send system information of the first cell on a second resource of the first cell, and send system information of the at least one second cell on a third resource that is of the first cell and that corresponds to the at least one second cell.

In a possible implementation method, the first indication information is downlink control information, the downlink control information includes a first field, and the first field indicates that the system information of the first cell changes and/or the system information of the at least one second cell changes.

In a possible implementation method, the first field includes a first indicator field and a second indicator field, the first indicator field indicates that the system information of the first cell changes, and the second indicator field indicates that the system information of the at least one second cell changes.

In a possible implementation method, the first field is a reserved bit in the downlink control information, a field of a short message in the downlink control information, or a reserved bit of a short message in the downlink control information.

In a possible implementation method, the first indication information is downlink control information, and a radio network temporary identifier RNTI for scrambling the downlink control information indicates that the system information of the first cell changes and/or the system information of the at least one second cell changes.

In a possible implementation method, the processing unit 510 is further configured to control the transceiver unit 520 to send second indication information, where the second indication information indicates a cell identifier of a cell whose system information changes.

In a possible implementation method, the first indication information further indicates a cell identifier of a cell whose system information changes.

In a possible implementation method, the processing unit 510 is further configured to control the transceiver unit 520 to: send first configuration information to a terminal device served by the first cell, where the first configuration information includes a configuration of a paging occasion of the first cell; and send second configuration information to a terminal device served by the at least one second cell, where the second configuration information includes a configuration of a paging occasion of each of the at least one second cell.

In a possible implementation method, the first resource includes the paging occasion of the first cell and the paging occasion of the at least one second cell.

In a possible implementation method, paging occasions of any two of the first cell and the at least one second cell do not overlap.

In a possible implementation method, the first indication information indicates that the system information of the first cell changes, and the first resource includes the paging occasion of the first cell and the paging occasion of the at least one second cell; or the first indication information indicates that the system information of the at least one second cell changes, the first resource includes the paging occasion of the at least one second cell, and the first resource does not include the paging occasion of the first cell.

When the communication apparatus 500 is configured to implement functions of the terminal device in the foregoing method embodiment, the processing unit 510 is configured to control the transceiver unit 520 to receive first indication information from a first cell on a first resource of the first cell, where the terminal device camps on a second cell, and the first indication information indicates that system information of the first cell changes and/or system information of the second cell changes.

In a possible implementation method, that the processing unit 510 is configured to control the transceiver unit 520 to receive the first indication information from the first cell on the first resource of the first cell specifically includes: configured to receive the first indication information from the first cell on a paging occasion of the terminal device, where the paging occasion is included in the first resource.

In a possible implementation method, the first indication information indicates that the system information of the first cell changes; and the processing unit 510 is further configured to control the transceiver unit 520 to receive the system information of the first cell on a second resource of the first cell.

In a possible implementation method, the first indication information indicates that the system information of the second cell changes; and the processing unit 510 is further configured to control the transceiver unit 520 to receive the system information of the second cell on a third resource that is of the first cell and that corresponds to the second cell.

In a possible implementation method, the first indication information is downlink control information, the downlink control information includes a first field, and the first field indicates that the system information of the first cell changes and/or the system information of the second cell changes.

In a possible implementation method, the first field includes a first indicator field and a second indicator field, the first indicator field indicates that the system information of the first cell changes, and the second indicator field indicates that the system information of the second cell changes.

In a possible implementation method, the first field is a reserved bit in the downlink control information, a field of a short message in the downlink control information, or a reserved bit of a short message in the downlink control information.

In a possible implementation method, the first indication information is downlink control information, and a radio network temporary identifier RNTI for scrambling the downlink control information indicates that the system information of the first cell changes and/or the system information of the second cell changes.

In a possible implementation method, the processing unit 510 is further configured to control the transceiver unit 520 to receive second indication information from the first cell, where the second indication information indicates a cell identifier of a cell whose system information changes.

In a possible implementation method, the first indication information further indicates a cell identifier of a cell whose system information changes.

In a possible implementation method, the processing unit 510 is further configured to control the transceiver unit 520 to receive configuration information from the first cell, where the configuration information includes a configuration of a paging occasion of the second cell.

In a possible implementation method, the first resource includes a paging occasion of the first cell and a paging occasion of the second cell.

In a possible implementation method, the processing unit 510 is further configured to: before receiving the system information of the second cell on the third resource that is of the first cell and that corresponds to the second cell, control the transceiver unit 520 to determine whether a cell identifier of a cell on which the terminal device camps includes a cell identifier of the second cell. That the processing unit 510 is configured to control the transceiver unit 520 to receive the system information of the second cell on the third resource that is of the first cell and that corresponds to the second cell specifically includes: When the cell identifier of the cell on which the terminal device camps includes the cell identifier of the second cell, control the transceiver unit 520 to receive the system information of the second cell on the third resource.

In a possible implementation method, the processing unit 510 is further configured to: before receiving the system information of the second cell on the third resource that is of the first cell and that corresponds to the second cell, control the transceiver unit 520 to determine whether a cell identifier of a cell on which the terminal device camps is the same as a cell identifier of the second cell. That the processing unit 510 is configured to control the transceiver unit 520 to receive the system information of the second cell on the third resource that is of the first cell and that corresponds to the second cell specifically includes: When the cell identifier of the cell on which the terminal device camps is the same as the cell identifier of the second cell, configured to control the transceiver unit 520 to receive the system information of the second cell from the first cell on the third resource.

In a possible implementation method, a paging occasion of the first cell does not overlap the paging occasion of the second cell.

In a possible implementation method, the first indication information indicates that the system information of the first cell changes, and the first resource includes the paging occasion of the first cell and the paging occasion of the second cell; or the first indication information indicates that the system information of the second cell changes, the first resource includes the paging occasion of the second cell, and the first resource does not include the paging occasion of the first cell.

For more detailed descriptions about the processing unit 510 and the transceiver unit 520, directly refer to related descriptions in the foregoing method embodiments. Details are not described herein again.

The communication apparatus 600 shown in FIG. 6 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, store input data for the processor 610 to run instructions, or store data generated after the processor 610 runs instructions.

When the communication apparatus 600 is configured to implement the foregoing method embodiments, the processor 610 is configured to implement the functions of the foregoing processing unit 510, and the interface circuit 620 is configured to implement the functions of the foregoing transceiver unit 520.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing a software instruction by the processor. The software instruction may include a corresponding software module. The software modules may be stored in a random access memory, a flash memory, a read-only memory, a programmable read-only memory, an erasable programmable read-only memory, an electrically erasable programmable read-only memory, a register, a hard disk drive, a removable hard disk drive, a compact optical disk read-only memory (compact disc read-only memory, CD-ROM), or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and runs on a target architecture. When the computer programs or the instructions are loaded and executed on a computer, all or some of the procedures or functions in embodiments of this application are executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or a data center to another website, computer, server, or data center in a wired or wireless manner. The computer-readable storage medium may be any usable medium accessible by the computer, or a data storage device, for example, a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A communication method, comprising:

    sending first indication information on a first resource of a first cell, wherein the first indication information indicates that system information of the first cell changes and/or system information of at least one second cell changes; and
    sending system information of the first cell on a second resource of the first cell, and sending system information of the at least one second cell on a third resource that is of the first cell and that corresponds to the at least one second cell.

2.  The method according to claim 1, wherein the first indication information is downlink control information, the downlink control information comprises a first field, and the first field indicates that the system information of the first cell changes and/or the system information of the at least one second cell changes.

3.  The method according to claim 2, wherein the first field comprises a first indicator field and a second indicator field, the first indicator field indicates that the system information of the first cell changes, and the second indicator field indicates that the system information of the at least one second cell changes.

4.  The method according to claim 2 or 3, wherein the first field is a reserved bit in the downlink control information, a field of a short message in the downlink control information, or a reserved bit of a short message in the downlink control information.

5.  The method according to claim 1, wherein the first indication information is downlink control information, and a radio network temporary identifier RNTI for scrambling the downlink control information indicates that the system information of the first cell changes and/or the system information of the at least one second cell changes.

6.  The method according to any one of claims 1 to 5, wherein the method further comprises:
    sending second indication information, wherein the second indication information indicates a cell identifier of a cell whose system information changes.

7.  The method according to any one of claims 1 to 6, wherein the first indication information further indicates a cell identifier of a cell whose system information changes.

8.  The method according to any one of claims 1 to 7, wherein the method further comprises:

    sending first configuration information to a terminal device served by the first cell, wherein the first configuration information comprises a configuration of a paging occasion of the first cell; and
    sending second configuration information to a terminal device served by the at least one second cell, wherein the second configuration information comprises a configuration of a paging occasion of each of the at least one second cell.

9. The method according to any one of claims 1 to 8, wherein the first resource comprises the paging occasion of the first cell and the paging occasion of the at least one second cell.

10. The method according to any one of claims 1 to 8, wherein paging occasions of any two of the first cell and the at least one second cell do not overlap.

11. The method according to claim 10, wherein

the first indication information indicates that the system information of the first cell changes, and the first resource comprises the paging occasion of the first cell and the paging occasion of the at least one second cell; or
the first indication information indicates that the system information of the at least one second cell changes, the first resource comprises the paging occasion of the at least one second cell, and the first resource does not comprise the paging occasion of the first cell.

12. A communication method, comprising:
receiving, by a terminal device, first indication information from a first cell on a first resource of the first cell, wherein the terminal device camps on a second cell, and the first indication information indicates that system information of the first cell changes and/or system information of the second cell changes.

13. The method according to claim 12, wherein receiving, by the terminal device, the first indication information from the first cell on the first resource of the first cell comprises:
receiving, by the terminal device, the first indication information from the first cell on a paging occasion of the terminal device, wherein the paging occasion is comprised in the first resource.

14. The method according to claim 12 or 13, wherein the first indication information indicates that the system information of the first cell changes, and the method further comprises:
receiving, by the terminal device, system information of the first cell on a second resource of the first cell.

15. The method according to claim 12 or 13, wherein the first indication information indicates that the system information of the second cell changes, and the method further comprises:
receiving, by the terminal device, system information of the second cell on a third resource that is of the first cell and that corresponds to the second cell.

16. The method according to any one of claims 12 to 15, wherein the first indication information is downlink control information, the downlink control information comprises a first field, and the first field indicates that the system information of the first cell changes and/or the system information of the second cell changes.

17. The method according to claim 16, wherein the first field comprises a first indicator field and a second indicator field, the first indicator field indicates that the system information of the first cell changes, and the second indicator field indicates that the system information of the second cell changes.

18. The method according to claim 16 or 17, wherein the first field is a reserved bit in the downlink control information, a field of a short message in the downlink control information, or a reserved bit of a short message in the downlink control information.

19. The method according to claim 12, wherein the first indication information is downlink control information, and a radio network temporary identifier RNTI for scrambling the downlink control information indicates that the system information of the first cell changes and/or the system information of the second cell changes.

20. The method according to any one of claims 12 to 19, wherein the method further comprises:
receiving, by the terminal device, second indication information from the first cell, wherein the second indication information indicates a cell identifier of a cell whose system information changes.

21. The method according to any one of claims 12 to 19, wherein the first indication information further indicates a cell identifier of a cell whose system information changes.

22. The method according to any one of claims 12 to 21, wherein the method further comprises:
receiving, by the terminal device, configuration information from the first cell, wherein the configuration information comprises a configuration of a paging occasion of the second cell.

23. The method according to claim 15, wherein the first resource comprises a paging occasion of the first cell and a paging occasion of the second cell.

24. The method according to claim 23, wherein before receiving, by the terminal device, the system information of the second cell on the third resource that is of the first cell and that corresponds to the second cell, comprising:

determining, by the terminal device, whether a cell identifier of a cell on which the terminal device camps comprises a cell identifier of the second cell; and
receiving, by the terminal device, the system information of the second cell on the third resource that is of the first cell and that corresponds to the second cell comprises:
when the cell identifier of the cell on which the terminal device camps comprises the cell identifier of the second cell, receiving, by the terminal device, the system information of the second cell on the third resource.

25. The method according to claim 23, wherein before receiving, by the terminal device, the system information of the second cell on the third resource that is of the first cell and that corresponds to the second cell, comprising:

determining, by the terminal device, whether a cell identifier of a cell on which the terminal device camps is the same as a cell identifier of the second cell; and
receiving, by the terminal device, the system information of the second cell on the third resource that is of the first cell and that corresponds to the second cell comprises:
when the cell identifier of the cell on which the terminal device camps is the same as the cell identifier of the second cell, receiving, by the terminal device, the system information of the second cell from the first cell on the third resource.

26. The method according to any one of claims 12 to 22, wherein a paging occasion of the first cell does not overlap the paging occasion of the second cell.

27. The method according to claim 26, wherein

the first indication information indicates that the system information of the first cell changes, and the first resource comprises the paging occasion of the first cell and the paging occasion of the second cell; or
the first indication information indicates that the system information of the second cell changes, the first resource comprises the paging occasion of the second cell, and the first resource does not comprise the paging occasion of the first cell.

28. A communication apparatus, comprising a processor coupled to a memory, wherein the processor is configured to invoke a program stored in the memory, to perform the method according to any one of claims 1 to 11, or perform the method according to any one of claims 12 to 27.

29. A communication apparatus, comprising a processor coupled to a memory, wherein the processor is configured to invoke a program stored in the memory, to perform the method according to any one of claims 1 to 11, or perform the method according to any one of claims 12 to 27.

30. A computer-readable storage medium, wherein the storage medium stores a computer program or instructions, and when the computer program or the instructions are executed by a communication apparatus, the method according to any one of claims 1 to 11 is implemented, or the method according to any one of claims 12 to 27 is implemented.

31. A computer program product, wherein the computer program product comprises a computer program or instructions, and when the computer program or the instructions are run by a communication apparatus, the method according to any one of claims 1 to 11 is performed, or the method according to any one of claims 12 to 27 is performed.

FIG. 1(a)

EP 4 694 377 A1

FIG. 1(b)

FIG. 2

FIG. 3

FIG. 4(a)

FIG. 4(b)

FIG. 5

FIG. 6

## INTERNATIONAL SEARCH REPORT

| International application No. |
|---|
| **PCT/CN2024/083862** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 系统信息, 系统消息, 改变, 变更, 更新, 变化, 指示, 通知, 下行控制信息, 寻呼, 时机, 控制小区, 信令小区, 数据小区, 数控分离, 节能, 节省, 降低, 减少, 能耗, 功耗, system information, SI, SIB, MIB, change, update, indicat+, notification, DCI, paging, occasion, PO, control, data, energy, conserv+, save, efficient, reduce

**C. DOCUMENTS CONSIDERED TO BE RELEVANT**

| Category* | Citation of document, with indication, where appropriate, of the relevant passages | Relevant to claim No. |
|---|---|---|
| X | WO 2017124434 A1 (HUAWEI TECHNOLOGIES CO., LTD.) 27 July 2017 (2017-07-27) description, pages 22-50 | 1-31 |
| A | CN 115460675 A (HUAWEI TECHNOLOGIES CO., LTD.) 09 December 2022 (2022-12-09) entire document | 1-31 |
| A | CN 108809491 A (VIVO COMMUNICATION TECHNOLOGY CO., LTD.) 13 November 2018 (2018-11-13) entire document | 1-31 |
| A | WO 2021000332 A1 (GUANGDONG OPPO MOBILE TELECOMMUNICATIONS CORP., LTD.) 07 January 2021 (2021-01-07) entire document | 1-31 |
| A | CATT. "SI change indication Content in Paging" *3GPP TSG-RAN WG2 Meeting #101bis R2-1804265*, 20 April 2018 (2018-04-20), entire document | 1-31 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2024** | **23 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083862**

| Patent document cited in search report | | | Publication date (day/month/year) | Patent family member(s) | Publication date (day/month/year) |
|---|---|---|---|---|---|
| WO | 2017124434 | A1 | 27 July 2017 | None | |
| CN | 115460675 | A | 09 December 2022 | None | |
| CN | 108809491 | A | 13 November 2018 | None | |
| WO | 2021000332 | A1 | 07 January 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310442418